# EUROPÄISCHE PATENTSCHRIFT

(11) **EP 2 927 649 B1**
(45) Veröffentlichungstag und Bekanntmachung des Hinweises auf die Patenterteilung: **05.07.2017**
(21) Anmeldenummer: 15001272.2
(22) Anmeldetag: 03.11.2011
(51) Int. Cl.: G01F 1/68, G01F 1/684, G01F 15/12

(54) **GASZÄHLER**
GAS METER
COMPTEUR À GAZ

(30) Priorität: 16.11.2010 DE 102010051594
(43) Veröffentlichungstag der Anmeldung: 07.10.2015
(62) Teilanmeldung aus: 11008767.3
(73) Patentinhaber: Diehl Metering GmbH, 91522 Ansbach (DE)
(72) Erfinder: Sonnenberg, Hans-Michael, DE - 91522 Ansbach (DE); Hegendörfer, Andreas, DE - 90617 Puschendorf (DE)
(74) Vertreter: Diehl Patentabteilung

(56) Entgegenhaltungen:
- EP-A1- 0 479 434
- DE-U1-202009 009 759
- US-A- 5 905 200
- US-A1- 2007 131 279

## Beschreibung

Die Erfindung betrifft einen Gaszähler.

In Erdgasleitungen geführtes Gas enthält einen gewissen Anteil an Schmutzpartikeln und Staub. Da das Gas aus Verbrauchserfassungsgründen einem Gaszähler zuzuführen ist, werden die Schmutzpartikel und der Staub zwangsläufig auch in den Gaszähler eingetragen. Im Gaszähler wird das Gas an entsprechenden, der Volumenmessung dienenden Sensorelementen, beispielsweise einem mikrothermischen Sensor, vorbeigeführt. Die im Gas enthaltenen Verunreinigungen können sich nun auf dem oder den Sensorelementen ablagern und mithin den Messeffekt respektive deren Messgenauigkeit nachteilig beeinflussen.

Bisher ist es bekannt, in den Erdgasleitungen oder im Gaszähler Siebe zum Auffangen dieser Verunreinigungen zu integrieren. Auch im mikrofluidischen Flussmessern wie z. B. dem in der US 2007/013127 A1 offenbarten, für eine biomedzinische Maschine geeigneten Sensor wird der dem Sensorelement zugeführte Fluidstrom gefiltert. Dies ist aufwändig, da die Siebe separat eingesetzt werden müssen. Nicht auszuschließen ist auch, dass sich die Siebe zu einem gewissen Grad mit aufgefangenen Verschmutzungen zusetzen.

Bekannt ist es z. B. aus der DE 20 2009 009 759 U1 auch, einen zu messenden Teilgasstrom aus dem Hauptgasstrom abzuzweigen, wobei die Gestaltung der Abzweigung so gewählt ist, dass etwaige im Gas enthaltene Partikel aufgrund ihres Massenimpulses an der Abzweigung vorbeifliegen. Die Volumenstromaufteilung zwischen Teilgasstrom, auch Bypassstrom genannt, und Hauptgasstrom kann sich jedoch über den Volumenstrom ändern, worüber die nutzbare Messdynamik reduziert wird.

Aus der EP 0 479 434 A1 ist ein Durchflussmesser für z. B. Gase bekannt, bei welchem ein im Gehäuse eingesetzter Einsatz den Bereich des Gaseinlasses vom Bereich des Gasauslasses trennt und ein die Messstrecke bildendes Messrohr beinhaltet. Dieser Messrohreinsatz weist Ein- und Ausströmungsöffnungen auf, die parallel zur Messrohrlängsachse angeordnet sind, so dass das zu messende Fluid (z. B. Gas) senkrecht zur Messrohrachse in eine Einströmkammer hinein bzw. aus einer Ausströmkammer hinaus fließt.

In der EP 0 987 526 A2 ist ein Gaszähler beschrieben, dessen Gehäuse in eine Einlass- und eine Auslasskammer geteilt ist, wobei ein oder mehrere Messrohre die das Gehäuse teilende Platte durchstoßen und somit den Gasfluss durch den Gasmesser ermöglichen. Der Einlass dieser Messrohre ist von einem Filterelement überzogen, um das Eindringen von Verunreinigungen in die Messstrecke zu verhindern.

Der Erfindung liegt das Problem zugrunde, einen Gaszähler anzugeben, der auf einfache Weise eine weitgehende Abscheidung etwaiger im zugeführten Gas enthaltener Verunreinigungen in Form von Schmutzpartikeln oder Staub ermöglicht und von der konkreten Anschlussgeometrie unabhängige Anströmverhältnisse schafft.

Zur Lösung dieses Problems ist erfindungsgemäß ein Gaszähler vorgesehen, umfassend ein Gehäuse mit einem Gaseinlassanschluss und einer diesem nachgeschalteten Einströmkammer, in die über eine Einströmöffnung Gas einströmt, welcher Einströmkammer eine dem Gasauslassanschluss vorgeschaltete Messstrecke mit einer Messeinrichtung, in der der Gasstrom gemessen wird, nachgeschaltet ist, wobei in die Einströmkammer ein Rohr ragt, das in die Messstrecke übergeht oder diese bildet und das im Wesentlichen senkrecht zur Gasdurchtrittsrichtung durch die Einströmöffnung verläuft und die Eintrittsöffnung zumindest abschnittsweise übergreift.

Der erfindungsgemäße Gaszähler zeichnet sich durch eine besondere geometrische Anordnung eines Rohres, das als Ansaugrohr dient und in eine Messstrecke übergeht oder diese bildet, relativ zu einer Einströmöffnung, über die das zu vermessende Gas in eine Einströmkammer einströmt, aus. Das Rohr, das in diese Einströmkammer einragt, kann selbst die Messstrecke bilden oder direkt in diese übergehen. In der Messstrecke, also einem in der Querschnittsfläche definierten Rohrabschnitt, befindet sich die Messeinrichtung, beispielsweise ein thermischer Sensor oder dergleichen, der der Gasvolumenmessung dient.

Insbesondere um verschiedene Anschlussgeometrien bei Gaszählern zu vereinheitlichen, wird das einströmende Gas zuerst durch eine Vorkammer geleitet, um unabhängig von der konkreten Anschlussgeometrie des Gaszählers (bekannt ist entweder ein separater Gaseinlassanschluss und ein separater Gasauslassanschluss, oder eine konzentrische Anschlussanordnung mit innen liegendem Einlassanschluss und außen liegendem Auslassanschluss, oder umgekehrt) einheitliche Anströmverhältnisse zur Einströmöffnung zu bilden. In dieser Vorkammer kommt es zu Verwirbelungen, ferner existieren dort Bereiche mit reduzierter Strömung, welche einen gewissen Anteil an Staub und Partikeln abscheiden lassen.

Zur Halterung respektive Positionierung des Rohres ist in dem Gehäuse ein Einsatz angeordnet, an dem das Rohr angeordnet ist, und über den der Bereich des Gaseinlasses vom Bereich des Gasauslasses getrennt wird. Ein solcher Einsatz, beispielsweise ein entsprechendes Kunststoffformteil oder dergleichen, ist auf einfache Weise herstellbar, das Rohr wird über geeignete Haltemittel, gegebenenfalls in Verbindung mit entsprechenden Dichtelementen, hieran fixiert. Dabei kann der Einsatz beliebig konfiguriert sein, solange er eine dichte Abtrennung zwischen Gehäuseeinlassbereich und Gehäuseauslassbereich ermöglicht.

Der Einsatz selbst trennt das Gehäuse in einen an den Gaseinlass- und den Gasauslassanschluss angrenzenden oberen und einen unteren Abschnitt und bildet gleichzeitig die Vorkammer aus, wobei das Rohr im unteren Gehäuseabschnitt aufgenommen ist. Die Einströmöffnung ist folglich in einer Wand des Einsatzes ausgebildet, welche Wand die Vorkammer abgrenzt und auch die Trennebene zwischen oberem und unterem Kammervolumen bildet. Das Rohr befindet sich im unteren Gehäusebereich. Die Vorkammer ist durch eine Trennwand vom Gehäuseauslassbereich getrennt.

Erfindungsgemäß ragt nun das Rohr in die Einströmkammer, wobei die Rohrlängsachse im Wesentlichen senkrecht zur grundsätzlichen Durchströmrichtung des Gases durch die Einströmöffnung steht. Die theoretische grundsätzliche Durchströmrichtung im Sinne der Anmeldung steht senkrecht auf der Öffnungsebene. Weiterhin übergreift das einragende Rohr die Einströmöffnung, die querschnittlich gesehen rund oder länglich oder dergleichen sein kann, zumindest abschnittsweise, bevorzugt um wenigstens die Hälfte der Öffnungslänge der Einströmöffnung. Das offene Ende des Rohres, das rechtwinklig zur Rohrlängsachse endet, steht folglich quasi parallel zur Gaseinströmrichtung. Aus dieser erfindungsgemäß vorgesehenen Anordnung respektive Positionierung des Rohres relativ zur Einströmöffnung und damit zur Gaseinströmrichtung ergibt sich nun, dass das einströmende Gas nicht unmittelbar in das Rohr einströmt, sondern gezwungenermaßen zunächst um das die Einströmöffnung überragende Rohr herumströmt, mithin also einen Drehimpuls erfährt. Hieraus resultiert, dass es zu einer Rotation des Gasstroms kommt, mithin also zu einer zyklonartigen Bewegung des einströmenden Gases um das Rohr herum. Hieraus resultiert, dass etwaige mitgeführte Schmutzpartikel und Ähnliches sich in einem Bereich unterhalb des Rohres abscheiden, da sie in den Randbereich des Wirbels gedrängt werden und aufgrund der dortigen niedrigeren Geschwindigkeit ausfallen und sich beispielsweise bodenseitig ansammeln. Das zwangsläufig verwirbelte Gas tritt erst nach der Zwangsverwirbelung an der Stirnseite des Rohres in dieses ein, wenn es also bereits von mitgeführten Partikeln gereinigt ist. Durch das Rohr gelangt es sodann in die Messstrecke, wo es vermessen wird.

Mit dem erfindungsgemäßen Gaszähler ist es infolge der konstruktionsbedingt erzwungenen Rotation oder Verwirbelung des einströmenden Gases damit möglich, die Schmutzpartikel aus dem Gasvolumenstrom nahezu vollständig herauszufiltern respektive abzuscheiden, ohne dass die Gleichmäßigkeit der Strömung, zum Beispiel durch Verstopfen eines Siebes, im Einlauf nachteilig beeinflusst wird, während gleichzeitig der gegebene Druckverlust infolge der Partikelabscheidung minimal ist.

Besonders zweckmäßig ist es, wenn die Einströmöffnung seitlich zur Rohrlängsachse versetzt angeordnet ist. Das heißt, dass - gesehen in Rohrlängsrichtung - die Einströmöffnung nicht exakt oberhalb des Rohres angeordnet ist, sondern seitlich versetzt dazu positioniert ist. Dies bewirkt, dass das einströmende Gas ebenfalls seitlich versetzt zum Rohr einströmt und mithin aufgrund dieser Einströmposition zwangsläufig in der Einströmkammer verwirbelt wird respektive es zur Zwangsrotation kommt, die gegebenenfalls durch die Kammergeometrie noch unterstützt werden kann. Die Kammer ist grundsätzlich so groß gestaltet, dass sich eine Strömungsverwirbelung ausbilden kann, dass die Strömungsgeschwindigkeit hierüber lokal reduziert wird und ein genügend großes Volumen zur Verfügung steht, in dem sich heraus fallende Partikel ansammeln können. Auch bei dieser versetzten Anordnung der Einströmöffnung bleibt die grundsätzliche Relativposition von Rohr zur Einströmöffnung gleich, das heißt, dass die Öffnung des Rohres so positioniert ist, resultierend aus der Rohranordnung relativ zur Einströmöffnung, dass es keine direkten Strömungslinien von der Einströmöffnung in das offene Rohrende gibt.

Wie bereits beschrieben, erstreckt sich das Rohr um wenigstens die Hälfte der Öffnungslänge, vorzugsweise um wenigstens zwei Drittel der Öffnungslänge, gesehen in Rohrlängsrichtung, über die Einströmöffnung. Das Rohr selbst ist bevorzugt zumindest im Bereich, in dem es die Einströmöffnung übergreift, frei tragend, sodass das Gas quasi behinderungsfrei um das frei liegende, zu allen benachbarten Kammerwänden beabstandete Rohr zirkulieren kann.

In Weiterbildung der Erfindung kann vorgesehen sein, dass ein das sich über die Einströmöffnung hinaus erstreckende Rohr vorzugsweise im Bereich seiner Gaseintrittsöffnung umgebendes, sich zur Wand der Einströmkammer erstreckendes Filterelement vorgesehen ist. Bei dieser Erfindungsausgestaltung ist einerseits das Rohr derart lang gewählt, dass es sich über die gesamte Länge der Einströmöffnung hinaus erstreckt. Darüber hinaus ist ein Filterelement vorgesehen, das den Bereich der Einströmkammer, in den das Gas über die Einströmöffnung einströmt, und in dem es zur Verwirbelung kommt, von einem Bereich, in dem die Rohreintrittsöffnung vorgesehen ist, abtrennt. Das heißt, dass das einströmende, verwirbelte Gas zusätzlich noch durch das Filterelement hindurchtreten muss, wobei dieses Filterelement als ein Gitter oder grobmaschiger Filter ausgeführt ist, über das kein allzu großer Druckunterschied erzeugt wird. Wird bereits durch die erfindungsgemäße zyklonartige Abscheidung der allergrößte Teil etwaiger Verunreinigungen abgetrennt, so bleibt der Rest der noch im verwirbelten Gasstrom mitgeführten Verunreinigungen in diesem Filterelement hängen. Die Gefahr eines Zusetzens dieses Filterelements ist nicht gegeben, da der dort abgeschiedene Verschmutzungsanteil vernachlässigbar gering ist.

Eine zweckmäßige Weiterbildung der Erfindung sieht ferner vor, dass im Inneren des Rohres ein der Messeinrichtung vorgeschalteter Strömungsgleichrichter angeordnet ist. Dieser Strömungsgleichrichter dient dazu, die zuvor verwirbelte und auch noch verwirbelt, also ungerichtet in das Rohr eintretende Strömung wieder auszurichten, sodass für die nachfolgende Messeinrichtung keine Beeinträchtigungen aufgrund etwaiger Strömungsungleichförmigkeiten entstehen. Grundsätzlich ist es denkbar, diesen Gleichrichter bis direkt an die Messeinrichtung zu führen respektive diese direkt hinter dem Gleichrichter anzuordnen. Gleichermaßen ist es aber auch möglich, die Teilströme, die den Gleichrichter durchströmen, hinter diesem wieder zusammenzuführen und als gemeinsamen Volumenstrom zur Messeinrichtung zu führen. Denn aufgrund der Gleichrichtung kommt es zu keinen weiteren Verwirbelungen oder Vermischungen im Bereich hinter dem Strömungsgleichrichter.

Darüber hinaus besteht die Möglichkeit, an der Messeinrichtung einen Teilvolumenstrom abzuzweigen, der dem Sensor zugeführt und der vermessen wird. Dieser Teilvolumenstrom kann aus dem dem Gleichrichter nachgeschalteten Gesamtvolumenstrom an einer Stelle abgezweigt werden, die entfernt von dem Volumenstrombereich ist, in dem theoretisch noch in wenngleich geringstem Maß etwaige Verunreinigungen vorhanden sein könnten. Bei horizontaler Ausrichtung der Messstrecke kann folglich der Abgriff des Teilvolumenstroms im oberen Bereich der rohrförmigen Messstrecke erfolgen, da gewichtsbedingt etwaige Verunreinigungen im unteren Bereich des Volumenstroms vorliegen würden. Auch hierüber kann eine weitere Maßnahme getroffen werden, um zu verhindern, dass auch nur geringste Mengen etwaiger Verunreinigungen dem Sensor zugeführt werden.

In Weiterbildung der Erfindung kann vorgesehen sein, dass das Rohr als Doppelrohr mit einem Innen- und einem Außenrohr ausgeführt ist, oder dass das Rohr zumindest abschnittsweise in einem zweiten Rohr aufgenommen ist, wobei das Volumen zwischen dem Innen- und dem Außenrohr oder zwischen dem ersten und dem zweiten Rohr einen Bypasskanal bildet. Diese quasi Doppelrohr-Ausführung ermöglicht es, das Gas an unterschiedlichen Stellen anzusaugen und in Teilströmungen zu unterteilen. Dabei ist davon auszugehen, dass im Bereich des Innenrohres oder des ersten Rohres ein geringerer Verschmutzungsgrad gegeben ist, als im äußeren Bypassteilstrom. Das heißt, dass bereits vor der Zuführung zur Messeinrichtung respektive, sofern vorhanden, bereits vor dem Gleichrichter eine Stromaufteilung vorgenommen wird, wobei nur beispielsweise der im Innenrohr oder dem ersten Rohr geführte Volumenstrom der Messeinrichtung zugeführt wird, während der Bypassteilstrom nicht vermessen wird. Denkbar wäre es aber auch, den Bypassteilstrom nach Durchtritt durch den Gleichrichter wiederum mit dem Hauptgasstrom zusammenzuführen, da es gleichrichtungsbedingt nicht zu weiteren Verwirbelungen kommt, so dass innerhalb der Messeinrichtung ein definiertes Teilstromvolumen, von dem ausgegangen wird, dass es partikelfrei ist, vermessen werden kann.

Die Messstrecke selbst mündet bevorzugt direkt in einen Gasauslassbereich, der direkt mit dem Gasauslassanschluss verbunden ist. Das heißt, dass das Gas in den großdimensionierten Einlassbereich einströmt, der den wesentlichen Teil des Gehäuses einnimmt. Dieser Bereich wird also durch das Einlassgas gespült. Nach Eintreten in das Rohr gelangt das Gas zur Messeinrichtung und von dort mehr oder weniger unmittelbar in den Gasauslassbereich und zum Gasauslass. Das heißt, sobald das Gas sich im Rohr befindet, wird letztlich nur noch die Messung vorgenommen, danach wird das Gas abgeführt. Der Auslasskanal, der der Messeinrichtung nachgeschaltet ist, bzw. der Gasauslassbereich ist also mit dem Gasauslass des Zählergehäuses verbunden, anders als bei bisher bekannten Gaszählern, bei denen normalerweise der Auslassbereich "offen" gestaltet ist, da in den Zwischenräumen des Zählergehäuses ein Druckausgleich erforderlich ist. Dies ist üblicherweise die Auslassseite, das heißt, dass nach der Durchströmung der Messeinrichtung das Gas in das offene Zählergehäuse gelangt. Erfindungsgemäß ist dies hier nicht der Fall, da das Gas nach Durchtritt durch die Messeinrichtung auf quasi direktem Weg zum Gasauslass geführt wird.

Eine weitere Ausgestaltung des Einsatzes sieht vor, einen zumindest abschnittsweise querschnittlichen zylindrischen Hohlkörper als Einsatz zu verwenden, in den ein die Einströmöffnung aufweisendes Gaszuführrohr mündet, das beispielsweise direkt mit dem Gaseinlass gekoppelt wird, und aus welchem Hohlkörper sich das Rohr herauserstreckt, mithin also in die Messstrecke übergeht. Dieser zylindrische Hohlkörper bildet die Einströmkammer. Aufgrund seiner zylindrischen Form kommt es zwangsläufig zu einer Rotation des einströmenden Gases, wobei auch hier bevorzugt die Einströmöffnung seitlich versetzt zum übergreifenden Rohr angeordnet ist. Der Einsatz kann ferner einen ein zweites Rohr bildenden Abschnitt aufweisen, in dem das erste Rohr angeordnet ist. Wie bereits zuvor beschrieben besteht die Möglichkeit, das Rohr in einem zweiten Rohr aufzunehmen, mithin also eine Doppelwandigkeit zu realisieren, wobei aus dem zylindrischen Hohlkörper das Gas in beide Teilvolumina eintritt. Hierüber kann also ein Teil- oder Bypassgasstrom vom zentralen Hauptgasstrom abgetrennt werden, wobei bevorzugt der zentrale Hauptgasstrom der weiteren Messung zugeführt wird.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßen Gaszählers im Schnitt,
- Fig. 2: eine Perspektivansicht eines weiteren Einsatzes eines Gaszählers im Schnitt,
- Fig. 3: eine weitere Schnittansicht des Einsatzes aus Fig. 2,
- Fig. 4: eine Prinzipdarstellung im Schnitt eines weiteren verwendbaren Einsatzes, und
- Fig. 5: eine Prinzipdarstellung eines erfindungsgemäßen Gaszählers einer weiteren Ausführungsform im Schnitt.

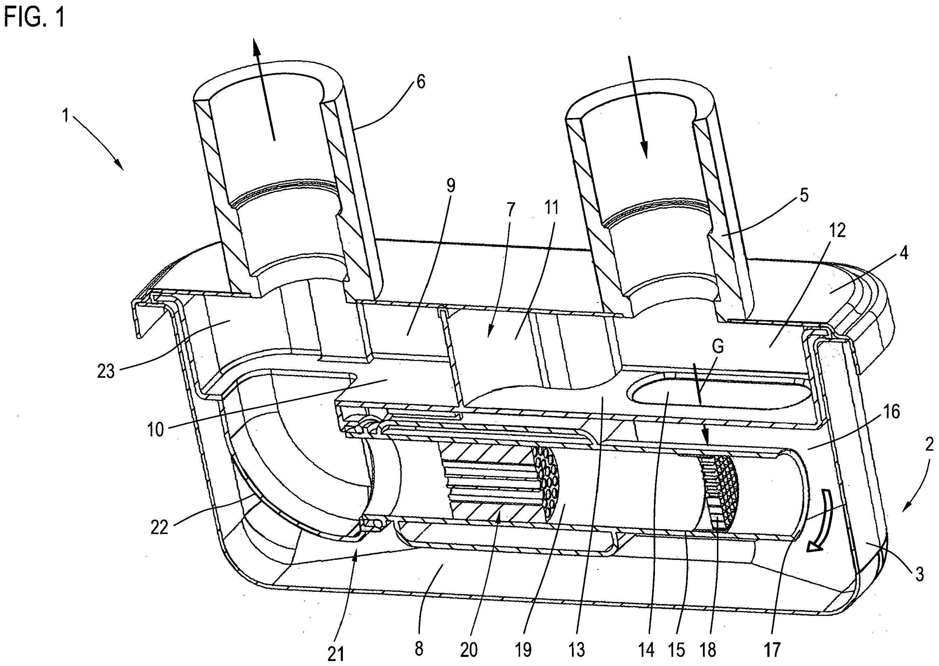

Fig. 1 zeigt einen erfindungsgemäßen Gaszähler 1 in einer Schnittdarstellung. Der Gaszähler 1 besteht aus einem Zählergehäuse 2, umfassend ein unteres, topfförmiges Gehäuseteil 3 sowie einen darauf abgedichtet abgesetzten Deckel 4, an dem ein Gaseinlassanschluss 5 sowie ein Gasauslassanschluss 6 als separate, beabstandete Anschlüsse angeordnet sind. An diesen werden entsprechende Rohrleitungen angeschlossen.

Im Gehäuse 2 befindet sich ferner ein Einsatz 7, beispielsweise ein Kunststoffformteil, das zwischen Gehäuseteil 3 und Deckel 4 randseitig abgedichtet aufgenommen ist. Über den Einsatz 7 wird das Gehäuse 2 letztlich in zwei Bereiche unterteilt, einen unteren Gehäusebereich 8 sowie einen oberen Gehäusebereich 9, die über eine sich horizontal erstreckende Trennebene 10 voneinander getrennt sind.

Über eine Trennwand 11, die abgedichtet zum Deckel 4 anliegt, wird eine Vorkammer 12 definiert, in die der Gaseinlassanschluss 5 mündet. Die Trennwand 11 ist dabei so konfiguriert, dass bei Aufsetzen eines Deckels 4 mit einer anderen Anschlusskonfiguration, nämlich mit konzentrisch angeordnetem Gaseinlass- und Gasauslassanschluss, gleichermaßen ein Zugang in diese Vorkammer 12 gegeben ist.

Die Vorkammer 12 ist über den Abschnitt 13 der Trennebene 10 nach unten hin begrenzt. In diesem Abschnitt 13 befindet sich eine Einströmöffnung 14, die hier länglich ist. Diese Einströmöffnung 14 führt in den unteren Gehäusebereich 8.

In dem unteren Gehäusebereich 8 befindet sich ferner ein Rohr 15, das über nicht näher gezeigte Haltemittel am Einsatz 7 angeordnet ist. Das Rohr 15 erstreckt sich in eine Einströmkammer 16, die letztlich von dem unteren Gehäusebereich 8 gebildet ist, da der untere Gehäusebereich 8 über die Einströmöffnung 14 insgesamt zugänglich ist. Ersichtlich verläuft das Rohr 15 im Wesentlichen senkrecht zur Einströmrichtung des Gases, die durch den Pfeil G angedeutet ist, durch die Einströmöffnung 14. Diese generelle Durchtrittsrichtung ist als die Normale auf die Ebene, in der die Öffnung liegt, definiert. Es überdeckt auch die Einströmöffnung 14 nahezu über deren gesamte Länge, das heißt, dass das vordere Rohrende 17 im Bereich oder jenseits des Endes der Einströmöffnung 14 positioniert ist. Das vordere Rohrende 17 steht senkrecht zur Längsachse des Rohres 15.

Im Inneren des Rohres 15 ist ein Strömungsgleichrichter 18 angeordnet, dem die eigentliche Messstrecke 19 nachgeschaltet ist, die bei diesem Ausführungsbeispiel vom Rohr 15 gebildet wird. In der Messstrecke 19 befindet sich eine Messeinrichtung 20, die hier nicht näher beschrieben ist, jedoch in jedem Fall einen oder mehrere Sensoren, insbesondere thermische Sensoren, umfasst, die der Messung des durch die Messstrecke 19 strömenden Gases dient. Die gezeigte Messeinrichtung 20 ist bei diesem Ausführungsbeispiel gleichzeitig als Differenzdruckerzeuger ausgeführt, kann aber auch anderer Art respektive Konstruktion sein.

Wie beschrieben ist das Rohr 15 mit dem Einsatz 7 verbunden, im gezeigten Beispiel erstreckt sich das Rohr 15 bis in den Bereich einer Anschlussstelle 21, an der das Rohr in einen weiterführenden Abschnitt 22, der einsatzseitig ausgebildet ist, mündet, wo das Gas umgelenkt wird und in eine Gasauslasskammer 23 geführt wird, von wo aus es unmittelbar zum Gasauslass 6 gelangt.

Strömt Gas über den Gaseinlass 5 in die Vorkammer 12, so wird es dort erstmals verwirbelt, da die Vorkammer 12 ein gewisses unsymmetrisches Volumen besitzt. Sodann strömt das Gas durch die Einströmöffnung 12 in die Einströmkammer 16. Die Einströmöffnung 14 ist seitlich versetzt bezüglich der Längsachse des Rohres 15 angeordnet. Im gezeigten Beispiel befindet sich die Einströmöffnung 14 ersichtlich zur - bezogen auf die Schnittebene - hinteren Seitenwand des Einsatzes 7 hin versetzt. Nachdem das Rohr 15 jedoch mittig im Gehäuse angeordnet ist, mithin also auch mittig am Einsatz 7 angeordnet ist, ist folglich ein seitlicher Versatz gegeben. Hieraus resultiert, dass das einströmende Gas seitlich an dem Rohr 15 vorbeiströmt und es zu einer Rotationsbewegung kommt, das heißt, dass das Gas um das Rohr 15 herum strömt. Die Strömung erfährt also eine Rotation respektive Verwirbelung. Die Einströmkammer 16 ist dabei so ausgestaltet, dass sich der Strömungswirbel ausbilden kann. Es kommt zu einer Reduzierung der Strömungsgeschwindigkeit. Da ein hinreichend großes Volumen zur Verfügung steht, können sich im zuströmenden Gas befindliche Verunreinigungspartikel im Bereich des Bodens des Gehäuseteils 3 ansammeln. Das heißt, diese werden dort abgeschieden. Dieser Abscheideeffekt resultiert aus der hier zwangsweise erzeugten Rotation des Gases um das Rohr 15 herum respektive der definierten Verwirbelung und den daraus resultierenden Geschwindigkeitsunterschieden.

Wie beschrieben steht die Öffnung respektive das Ende 17 des Rohres 15 vertikal zur Rohrlängsachse, mithin also quasi parallel zur Zuströmrichtung des Gases. Das heißt, dass es keine direkte Zuströmung von Gas in das Rohr 15 gibt. Vielmehr muss das Gas zwangsläufig wenigstens ein- oder mehrmals um das Rohr strömen und folglich verwirbeln, bis es stirnseitig in das Rohr 15 eintreten kann.

Infolge der Abscheidung der Schmutzpartikel resultierend aus dieser dem Eintritt vorgeschaltenen Rotation respektive Verwirbelung - hinzukommt, dass aufgrund der Verwirbelung in der Vorkammer 12 auch dort bereits ein gewisser Partikelanteil abgeschieden wurde - tritt ein nahezu partikelfreier Gasstrom in das Rohr 15 ein.

Dort gelangt das Gas zu dem Gleichrichter 18, über den die inhomogene Strömung gleichgerichtet wird, indem sie in eine Vielzahl einzelner Teilströme aufgeteilt wird. Diese Teilströme werden nach Durchströmung des Gleichrichters 18 wieder zusammengeführt, infolge der Gleichrichtung kommt es jedoch zu keiner weiteren Vermischung mehr. Es kann durch ein günstiges Verhältnis zwischen Gitterabstand und Steglänge der einzelnen den Gleichrichter bildenden Gitter sichergestellt werden.

Der gleichgerichtete Gasstrom gelangt sodann zur Messeinrichtung 20, wo ein bestimmter Teilstrom der Messung zugrunde gelegt wird, mithin also über den Sensor geführt wird. Da das zuströmende Gas nahezu vollständig partikelfrei ist, kommt es folglich zu keiner Zusetzung des Sensors und damit zu keiner nachteiligen Beeinträchtigung des Messeffekts. Nach Durchtritt durch die Messeinrichtung 20 gelangt das Gas über den Abschnitt 22 in den Bereich des Gasauslasses 6, wo es abgezogen wird.

Der erfindungsgemäße Gaszähler lässt, insbesondere infolge der konstruktionsbedingten erzwungenen Rotation des Gases um das im Bereich der Einströmöffnung 14 freitragende Rohr 15, eine Reduzierung der Schmutzbelastung des der Messeinrichtung 20 zugeführten Gases um bis zu 99 % zu, das heißt, dass nahezu die gesamten Schmutzpartikel ausgefiltert werden können. Dies geschieht ohne Einsatz irgendwelcher zusätzlicher Filter, die im Stand der Technik dazu dienen, eben diesen beachtlichen Verschmutzungsanteil auszufiltern und die sich daraus resultierend zusetzen können. Vielmehr erfolgt beim erfindungsgemäßen Gaszähler die Partikelabscheidung allein auf strömungstechnischem Wege, indem zum einen bereits in der Vorkammer aufgrund der dortigen Verwirbelung und gegebenen Geschwindigkeitsunterschiede eine Abscheidung erfolgt, sowie insbesondere im Bereich der Einströmkammer 16 und dem Bereich der erzwungenen Rotation.

Der in Fig. 1 gezeigte Gaszähler nutzt das untere Gehäuseteil 3 zur Bildung der Einströmkammer, das heißt, dass die Einströmkammer - die letztlich auch als Abscheidekammer bezeichnet werden kann - in dem Gehäuse 2 direkt integriert ist.

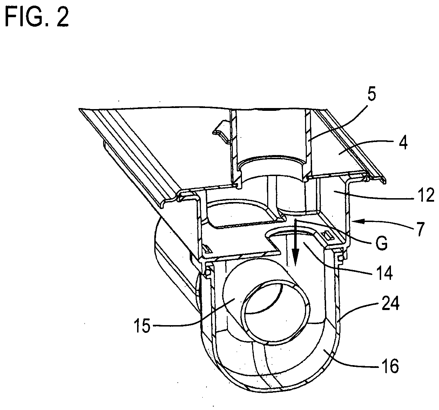

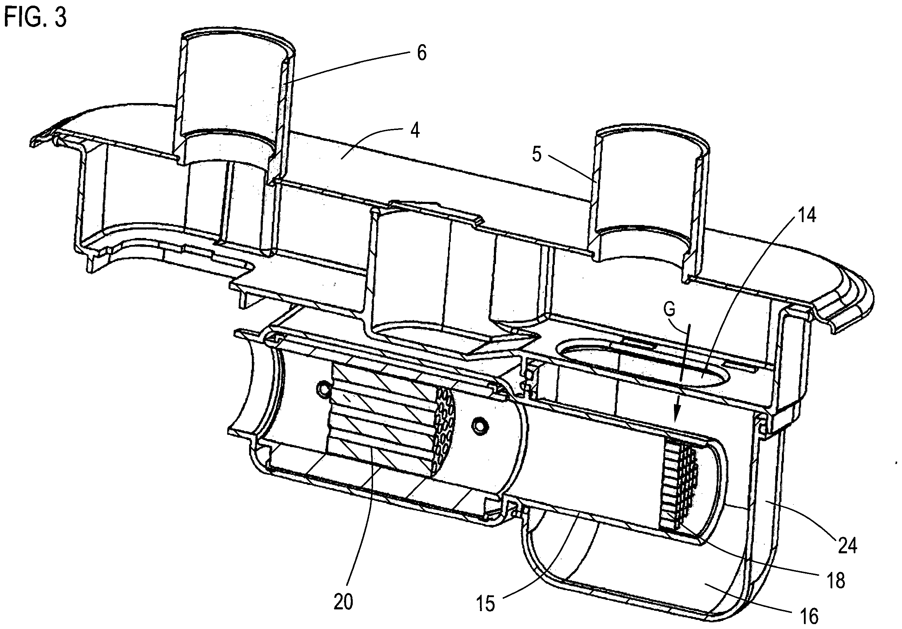

Alternativ ist es auch denkbar, wie in den Fig. 2 und 3 dargestellt, am Einsatz 7, der hier zusammen mit dem geschnitten gezeigten Deckel 4 gezeigt ist, ein weiteres Einsatzbauteil 24 anzuordnen, das die geschlossene Messkammer 16 bildet. Das heißt, dass hier die Messkammer 16 nicht vom unteren Gehäuseteil 3 gebildet wird und sich folglich über die gesamte Zählergehäuselänge erstreckt, sondern dass die Einströmkammer 16 als definiert begrenzte Kammer über das Einsatzbauteil 24 definiert ist. Wie Fig. 2 zeigt ist das Einsatzbauteil 24 im unteren Bereich gerundet ausgeführt, sodass in Verbindung mit der zur Längsachse des Rohres 15 seitlich versetzten Anordnung der Einströmöffnung 14 das Gas automatisch einen Drehimpuls erfährt und es mithin zu der beschriebenen Rotation um das Rohr 15 kommt, bevor das Gas in das Rohr 15 eintritt und von dort über den Gleichrichter 18 zur Messeinrichtung 20 gelangt.

Anders als in Fig. 1 dargestellt, ist es bei dem Einsatz gemäß der Fig. 2 und 3 nicht erforderlich, das freie hintere Ende der Messstrecke 19 über ein Einsatzteil mit dem Gasauslassanschluss 6 zu koppeln. Vielmehr kann hier das Gas in das freie Gehäusevolumen strömen und von dort zum Gasauslass 6 gelangen. Denn die Abtrennung des Gaseinlassbereichs vom Gasauslassbereich erfolgt hier letztlich über das Einsatzbauteil 24.

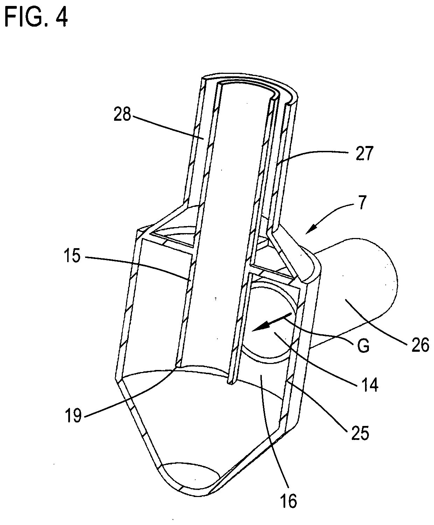

Fig. 4 zeigt schließlich eine weitere Ausführungsform eines verwendbaren Einsatzes 7. Dieser ist hier als abschnittsweise zylindrischer Hohlkörper ausgeführt, der einen zylindrischen Abschnitt 25 aufweist, der nach unten hin kegelig geschlossen ist. Dieser Bereich bildet die Einströmkammer 16. In diesen Bereich mündet beim gezeigten Beispiel ein Rohr 26 mit seiner Rohröffnung, die die Einströmöffnung 14 bildet. Das Rohr 26 kommuniziert in irgendeiner Weise mit der beschriebenen Vorkammer. Auch ist ein solches Rohr 26 nicht zwingend vorzusehen, vielmehr könnte auch lediglich eine entsprechende Einströmöffnung 14 vorgesehen sein.

In die Einströmkammer 16 mündet auch hier wiederum ein Rohr 15, es erstreckt sich über die Länge der Einströmöffnung 14, das untere Rohrende 17 steht wiederum senkrecht zur Rohrlängsachse und damit parallel zur Zuströmrichtung des Gases, sodass auch hier kein unmittelbarer Gaseintritt in das Rohr 15 gegeben ist. Im Rohr 15 befindet sich, wenngleich nicht näher gezeigt, nachfolgend die Messeinrichtung 20, gegebenenfalls auch ein Gleichrichter 18.

Der Einsatz 7 umfasst ferner ein zweites Rohr 27 bzw. an ihm ist ein solches zweites Rohr 27 angeformt, das mit Abstand das erste Rohr 15 umgibt. Hierüber wird ein Bypasskanal 28 realisiert. Denn die Einströmöffnung 16 ist zu diesem Bypasskanal 28 hin offen.

Strömt nun Gas in die Hohlkammer 16, so kommt es auch hier aufgrund der Anordnung des Rohres 15 relativ zur Einströmöffnung 14 zu der erzwungenen Rotation, wobei natürlich auch hier die Einströmöffnung 14 versetzt zur Rohrlängsachse angeordnet sein kann. Wird die Anordnung in der in Fig. 4 gezeigten vertikalen Anlage eingebaut, so sammelt sich etwaiger Schmutz zwangsläufig im Bereich des unteren kegelförmigen Abscheidebereichs. Erst nach Rotation kann das Gas in das Rohr 15 gelangen, wo es dann zur Messstrecke geführt wird. Ein gewisser Anteil an Gas tritt ferner über den Bypasskanal 28 aus der Einströmkammer 16 aus und kann entweder an der Messeinrichtung vorbeigeführt werden, wenn diese lediglich mit dem im Rohr 15 geführten Gas beaufschlagt wird.

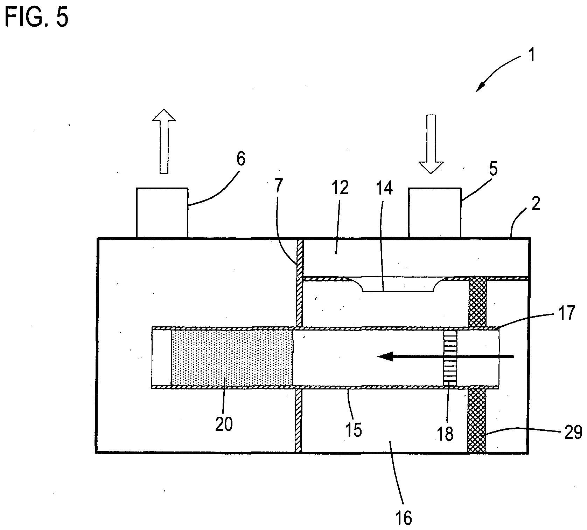

Fig. 5 zeigt schließlich eine weitere Ausführungsform eines erfindungsgemäßen Gaszählers 1 in Form einer reinen Prinzipdarstellung. Im Gehäuse 2, das wiederum über einen Einsatz 7 in einen Gaseinlassbereich und einen Gasauslassbereich getrennt ist, befindet sich wiederum ein Rohr 15 mit integriertem Strömungsgleichrichter 18 und Messeinrichtung 20. Über den Gaseinlass 5 strömt das Gas in eine Vorkammer 12, wo es bereits zu einer Verwirbelung und einer ersten Abscheidung etwaiger Schmutzpartikel kommt. Über eine Einströmöffnung 14 gelangt das Gas sodann in die Einströmkammer 16. Wiederum kommt es hier infolge der Anordnung des Rohres 15 senkrecht zur Einströmrichtung zu einer erzwungenen Rotation um das Rohr 15 und damit zur Abscheidung etwaiger Schmutzpartikel am Gehäuseboden.

Zusätzlich ist hier ein Filterelement 29 vorgesehen, das das Rohr 15 im Bereich des Gaseintrittsendes 19 umgibt und im Gehäuse 2 respektive zum Einsatz 7 hin abgedichtet ist. Das heißt, dass das einströmende Gas nach Verwirbelung und Umlauf um das Rohr 15 zwangsläufig durch das Filterelement 29, beispielsweise ein grobmaschiges Gitter oder Netz, treten muss. Hierüber wird ein trotz der zyklonartigen Abscheidung gegebenenfalls noch verbleibender Restpartikelgehalt im Filterelement 29 abgeschieden. Sodann tritt das Gas wie durch den Pfeil gezeigt wiederum in das Rohr 15 ein, wird gleichgerichtet und gelangt zur Messeinrichtung 20, von wo aus es in den Gasauslassbereich und von dort zum Gasauslassanschluss 6 gelangt.

## Patentansprüche

1. Gaszähler, umfassend ein Gehäuse (2) mit einem Gaseinlassanschluss (5) und einer diesem nachgeschalteten Einströmkammer (16), in die über eine Einströmöffnung (14) Gas einströmt, welcher Einströmkammer (16) eine einem Gasauslassanschluss (6) vorgeschaltete Messstrecke (19) mit einer Messeinrichtung (20), in der der Gasstrom gemessen wird, nachgeschaltet ist, wobei in die Einströmkammer (16) ein Rohr (15) ragt, das in die Messstrecke (19) übergeht oder diese bildet und das im Wesentlichen senkrecht zur Gasdurchtrittsrichtung durch die Einströmöffnung (14) verläuft und die Einströmöffnung (14) zumindest abschnittsweise übergreift, und wobei in dem Gehäuse (2) ein Einsatz (7) angeordnet ist, an dem das Rohr (15) angeordnet ist und über den der Bereich des Gaseinlasses vom Bereich des Gasauslasses getrennt wird,
**dadurch gekennzeichnet, dass** der Einsatz (7) das Gehäuse (2) in einen an den Gaseinlassanschluss (5) und den Gasauslassanschluss (6) angrenzenden oberen Abschnitt (9) und einen das Rohr (15) aufnehmenden unteren Abschnitt (8) trennt und gleichzeitig im oberen Gehäuseabschnitt (9) eine dem Gaseinlass (5) nach- und der Einströmkammer (16) vorgeschaltete Vorkammer (12) ausbildet, die über die Einströmöffnung (14) mit der Einströmkammer (16) kommuniziert und durch eine Trennwand (11) vom Bereich des Gasauslasses getrennt ist.

2. Gaszähler nach Anspruch 1, **dadurch gekennzeichnet, dass** die Einströmöffnung (14) seitlich zur Rohrlängsachse versetzt angeordnet ist.

3. Gaszähler nach Anspruch 1 oder 2, **dadurch gekennzeichnet, dass** das Rohr (15) die Einströmöffnung (14) um wenigstens die Hälfte der Öffnungslänge, vorzugsweise um wenigstens 2/3 der Öffnungslänge, gesehen in Rohrlängsrichtung, übergreift.

4. Gaszähler nach einem der vorangehenden Ansprüche, **dadurch gekennzeichnet, dass** das Rohr (15) zumindest in dem Bereich, in dem es die Einströmöffnung (14) übergreift, freitragend ist.

5. Gaszähler nach einem der vorangehenden Ansprüche, **dadurch gekennzeichnet, dass** ein das sich über die Einströmöffnung (14) hinaus erstreckende Rohr (15) vorzugsweise im Bereich seiner Gaseintrittsöffnung (17) umgebendes, sich zur Wand der Einströmkammer (16) erstreckendes Filterelement (29) vorgesehen ist.

6. Gaszähler nach einem der vorangehenden Ansprüche, **dadurch gekennzeichnet, dass** im Inneren des Rohrs (15) ein der Messeinrichtung (20) vorgeschalteter Strömungsgleichrichter (18) angeordnet ist.

7. Gaszähler nach einem der vorangehenden Ansprüche, **dadurch gekennzeichnet, dass** das Rohr als Doppelrohr mit einem Innen- und einem Außenrohr ausgeführt ist oder dass das Rohr (15) zumindest abschnittsweise in einem zweiten Rohr (27) aufgenommen ist, wobei das Volumen zwischen dem Innen- und dem Außenrohr oder zwischen dem ersten und dem zweiten Rohr (15, 27) einen Bypasskanal (28) bildet.

8. Gaszähler nach Anspruch 1, **dadurch gekennzeichnet, dass** die Messstrecke (19) direkt in einen Gasauslassbereich, der direkt mit dem Gasauslassanschluss (6) verbunden ist, mündet.

9. Gaszähler nach Anspruch 1, **dadurch gekennzeichnet, dass** der Einsatz (7) ein zumindest abschnittsweise querschnittlich zylindrischer Hohlkörper ist, in den vorzugsweise ein die Einströmöffnung (14) aufweisendes Gaszuführrohr (26) mündet und aus dem sich das Rohr (15) heraus erstreckt.

10. Gaszähler nach Anspruch 9, **dadurch gekennzeichnet, dass** der Einsatz (7) einen ein zweites Rohr (27) bildenden Abschnitt aufweist, in dem das erste Rohr (15) angeordnet ist.

## Claims

1. Gas meter, comprising a housing (2) with a gas inlet connection (5) and an inflow chamber (16), which is arranged downstream of the latter and into which gas flows via an inflow opening (14), arranged downstream of which inflow chamber (16) is a measuring section (19) arranged upstream of a gas outlet connection (6) and having a measuring device (20), in which the gas flow is measured, wherein projecting into the inflow chamber (16) there is a tube (15), which merges into the measuring section (19) or forms the latter and runs substantially perpendicularly to the gas flow direction through the inflow opening (14) and overlaps the inflow opening (14), at least in a certain portion, and wherein an insert (7), on which the tube (15) is arranged and by means of which the region of the gas inlet is separated from the region of the gas outlet, is arranged in the housing (2), **characterized in that** the insert (7) divides the housing (2) into an upper portion (9) adjoining the gas inlet connection (5) and the gas outlet connection (6) and a lower portion (8) accommodating the tube (15) and at the same time, in the upper housing portion (9), forms a prechamber (12) arranged downstream of the gas inlet (5) and upstream of the inflow chamber (16), communicating with the inflow chamber (16) via the inflow opening (14) and being separated from the region of the gas outlet by a dividing wall (11).

2. Gas meter according to Claim 1, **characterized in that** the inflow opening (14) is arranged laterally offset in relation to the longitudinal axis of the tube.

3. Gas meter according to Claim 1 or 2, **characterized in that** the tube (15) overlaps the inflow opening (14) by at least half the length of the opening, preferably by at least 2/3 of the length of the opening, as seen in the longitudinal direction of the tube.

4. Gas meter according to one of the preceding claims, **characterized in that** the tube (15) is self-supporting, at least in the region in which it overlaps the inflow opening (14).

5. Gas meter according to one of the preceding claims, **characterized in that** a filter element (29), which extends beyond the inflow opening (14) and surrounds the tube, preferably in the region of the gas inlet opening (17) of the latter, and extends to the wall of the inflow chamber (16), is provided.

6. Gas meter according to one of the preceding claims, **characterized in that** a flow straightener (18) arranged upstream of the measuring device (20) is arranged in the interior of the tube (15).

7. Gas meter according to one of the preceding claims, **characterized in that** the tube is configured as a double tube with an inner tube and an outer tube, or **in that** the tube (15) is accommodated in a second tube (27), at least in a certain portion, wherein the volume between the inner tube and the outer tube or between the first tube (15) and the second tube (27) forms a bypass channel (28).

8. Gas meter according to Claim 1, **characterized in that** the measuring section (19) opens directly into a gas outlet region, which is connected directly to the gas outlet connection (6).

9. Gas meter according to Claim 1, **characterized in that** the insert (7) is a hollow body which is cylindrical in cross section, at least in a certain portion, into which a gas feed tube (26) having the inflow opening (14) preferably opens and from which the tube (15) extends.

10. Gas meter according to Claim 9, **characterized in that** the insert (7) has a portion which forms a second tube (27), in which the first tube (15) is arranged.

## Revendications

1. Compteur à gaz, comprenant un boîtier (2) avec un raccord d'entrée de gaz (5) et une chambre d'afflux (16) montée en aval de celui-ci, dans laquelle afflue le gaz par le biais d'une ouverture d'afflux (14), en aval de laquelle chambre d'afflux (16) est montée une section de mesure (19) montée en amont d'un raccord de sortie de gaz (6) présentant un dispositif de mesure (20) dans lequel est mesuré le flux de gaz, un tube (15) pénétrant dans la chambre d'afflux (16), lequel se prolonge par la section de mesure (19) ou forme celle-ci, et lequel s'étend essentiellement perpendiculairement à la direction de passage de gaz à travers l'ouverture d'afflux (14) et s'engage au moins en partie par-dessus l'ouverture d'afflux (14), et un insert (7) étant disposé dans le boîtier (2), au niveau duquel le tube (15) est disposé, et par le biais duquel la région d'entrée de gaz est séparée de la région de sortie de gaz,
**caractérisé en ce que** l'insert (7) sépare le boîtier (2) en une portion supérieure (9) adjacente au raccord d'entrée de gaz (5) et au raccord de sortie de gaz (6) et une portion inférieure (8) qui reçoit le tube (15), et constitue en même temps, dans la portion supérieure de boîtier (9),
une préchambre (12) montée en aval de l'entrée de gaz (5) et en amont de la chambre d'afflux (16), laquelle communique par le biais de l'ouverture d'afflux (14) avec la chambre d'afflux (16) et est séparée de la région de sortie de gaz par le biais d'une paroi de séparation (11).

2. Compteur à gaz selon la revendication 1, **caractérisé en ce que** l'ouverture d'afflux (14) est disposée de manière décalée latéralement par rapport à l'axe longitudinal du tube.

3. Compteur à gaz selon la revendication 1 ou 2, **caractérisé en ce que** le tube (15) s'engage par-dessus l'ouverture d'afflux (14) sur au moins la moitié de la longueur d'ouverture, de préférence sur au moins 2/3 de la longueur d'ouverture, vu dans la direction longitudinale du tube.

4. Compteur à gaz selon l'une quelconque des revendications précédentes, **caractérisé en ce que** le tube (15) est auto-porteur, au moins dans la région dans laquelle il s'engage par-dessus l'ouverture d'afflux (14).

5. Compteur à gaz selon l'une quelconque des revendications précédentes, **caractérisé en ce qu'**il est prévu un élément de filtre (29) s'étendant vers la paroi de la chambre d'afflux (16), entourant le tube (15) s'étendant au-delà de l'ouverture d'afflux (14), de préférence dans la région de son ouverture d'entrée de gaz (17).

6. Compteur à gaz selon l'une quelconque des revendications précédentes, **caractérisé en ce qu'**à l'intérieur du tube (15) est disposé un redresseur de courant (18) monté en amont du dispositif de mesure (20).

7. Compteur à gaz selon l'une quelconque des revendications précédentes, **caractérisé en ce que** le tube est réalisé sous forme de double tube avec un tube intérieur et un tube extérieur, ou **en ce que** le tube (15) est reçu au moins en partie dans un deuxième tube (27), le volume entre le tube intérieur et le tube extérieur ou entre le premier et le deuxième tube (15, 27) formant un canal de dérivation (28).

8. Compteur à gaz selon la revendication 1, **caractérisé en ce que** la section de mesure (19) débouche directement dans une région de sortie de gaz qui est connectée directement au raccord de sortie de gaz (6).

9. Compteur à gaz selon la revendication 1, **caractérisé en ce que** l'insert (7) est un corps creux de section transversale au moins en partie cylindrique, dans lequel débouche de préférence un tube d'alimentation en gaz (26) présentant l'ouverture d'afflux (14) et hors duquel s'étend le tube (15).

10. Compteur à gaz selon la revendication 9, **caractérisé en ce que** l'insert (7) présente une portion formant un deuxième tube (27), dans laquelle est disposé le premier tube (15).
